(19) Europäisches Patentamt
European Patent Office
Office européen des brevets

(11) **EP 4 707 427 A1**

(12) **EUROPEAN PATENT APPLICATION**
published in accordance with Art. 153(4) EPC

(43) Date of publication:
**11.03.2026  Bulletin 2026/11**

(21) Application number: **24800112.5**

(22) Date of filing: **30.04.2024**

(51) International Patent Classification (IPC):
*C23C 26/00* (2006.01)   *B32B 15/01* (2006.01)
*B32B 15/08* (2006.01)   *C23C 28/00* (2006.01)

(52) Cooperative Patent Classification (CPC):
**B32B 15/01; B32B 15/08; C23C 26/00; C23C 28/00**

(86) International application number:
**PCT/JP2024/016687**

(87) International publication number:
**WO 2024/228381 (07.11.2024 Gazette 2024/45)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority:  **01.05.2023  JP 2023075763**

(71) Applicant: NIPPON STEEL CORPORATION
Chiyoda-ku
Tokyo 100-8071 (JP)

(72) Inventors:
• **AKAHOSHI, Makoto**
  **Tokyo 100-8071 (JP)**
• **TAKAHASHI, Takehiro**
  **Tokyo 100-8071 (JP)**

(74) Representative: **Vossius & Partner**
**Patentanwälte Rechtsanwälte mbB**
**Siebertstrasse 3**
**81675 München (DE)**

(54) **ORGANIC COATED STEEL SHEET**

(57)    The present invention provides a high-strength steel sheet in which hydrogen embrittlement cracking is less likely to occur. An organic coated steel sheet (1) according to the present invention has: a steel sheet (2) which has a tensile strength of 980 MPa or more; and an organic coating layer (3) which is disposed on at least a part of the surface of the steel sheet. This organic coated steel sheet (1) is characterized in that the organic coating layer (3) contains a nitrite salt as a nitrite radical in an amount of 1-30% by mass and 0.05 g/m² or more.

Fig. 1

EP 4 707 427 A1

**Description**

FIELD

The present invention relates to organic coated steel sheet.

BACKGROUND

In recent years, the steel sheet used for automobiles, home electrical appliances, building materials, and various other fields has been made higher in strength. For example, in the automotive field, use of high strength steel sheet has been increasing with the intent of lightening the weight of car bodies for improving fuel efficiency.

Such high strength steel sheet, in particular high strength steel sheet used for members for automobiles, is painted by electrodeposition to impart corrosion resistance and other desired properties. It is known that in the process of this electrodeposition painting, the application of voltage causes the water to be electrically broken down whereby hydrogen is generated. Further, the hydrogen generated at the time of electrodeposition painting penetrates the steel sheet and reaches a position deeper than the surface layer region of the steel sheet. As a result, it segregates at the martensite grain boundaries of the steel structure to cause the grain boundaries to become brittle and thereby sometimes cause the occurrence of cracking at the steel sheet. The cracking occurring because of such penetration of hydrogen is called "hydrogen embrittlement cracking" or "delayed fracture". Further, it is known that hydrogen embrittlement cracking occurs more easily along with an increase in strength of steel sheet.

Various measures have been studied up to now to counter hydrogen embrittlement cracking (delayed fracture) of high strength steel sheet. For example, PTL 1 discloses Fe-based electroplated high strength steel sheet with a low content of hydrogen diffusible in the steel obtained by annealing the steel sheet after electroplating so as to expel the diffusible hydrogen penetrating the steel at the time of electroplating into the furnace. The Fe-based electroplated high strength steel sheet disclosed in this PTL 1 has excellent chemical convertibility and painted corrosion resistance and is also excellent in delayed fracture resistance.

[CITATION LIST]

[PATENT LITERATURE]

[PTL 1] Japanese Unexamined Patent Publication No. 2022-180344

SUMMARY

[TECHNICAL PROBLEM]

In the high strength plated steel sheet such as disclosed in PTL 1, the surface of the base material steel sheet is formed with a plating layer, therefore it is considered possible to suppress the penetration of the hydrogen causing hydrogen embrittlement cracking. However, the end faces (cut faces) of the steel sheet where no plating layer is formed easily corrode. Such corrosion of the end faces also becomes a cause of not only red rust, but also generation of hydrogen. Further, if the hydrogen generated along with progression of corrosion ends up penetrating the steel sheet from the end faces of the steel sheet, in the high strength steel sheet, the above-mentioned such hydrogen embrittlement cracking is liable to occur.

Therefore, the present invention has as its object the provision of high strength steel sheet able to suppress hydrogen embrittlement cracking.

[SOLUTION TO PROBLEM]

The present invention includes the following aspects:

(Aspect 1) Organic coated steel sheet comprising

steel sheet having a tensile strength of 980 MPa or more and
an organic coating layer arranged on at least part of a surface of the steel sheet,
the organic coating layer containing a nitrous acid salt in a content of 1 to 30 mass% and 0.05 $g/m^2$ or more as a nitrous acid radical.

(Aspect 2) The organic coated steel sheet according to the aspect 1, wherein the nitrous acid salt is at least one type selected from a group comprising a lithium salt, sodium salt, potassium salt, magnesium salt, calcium salt, strontium salt, barium salt, and ammonium salt.

(Aspect 3) The organic coated steel sheet according to the aspect 1 or 2, wherein a plating layer is arranged between the steel sheet and the organic coating layer.

(Aspect 4) The organic coated steel sheet according to any one of the aspects 1 to 3, wherein the tensile strength of the steel sheet is 1.2 to 3.0 GPa.

(Aspect 5) A shaped article formed using an organic coated steel sheet according to any one of the aspects 1 to 4.

[ADVANTAGEOUS EFFECTS OF INVENTION]

According to the organic coated steel sheet of the present invention, it is possible to provide high strength steel sheet able to suppress hydrogen embrittlement cracking.

BRIEF DESCRIPTION OF DRAWINGS

FIG. 1 is a schematic view of an organic coated steel sheet according to one embodiment of the present invention.
FIG. 2 is a schematic view showing an apparatus 6 for evaluation of hydrogen embrittlement cracking of steel sheet.

DESCRIPTION OF EMBODIMENTS

Below, preferred embodiments of the organic coated steel sheet of the present invention will be explained in detail. Note that in this Description, the various numerical ranges, unless otherwise indicated, mean ranges including the upper and lower limit values.

The inventors engaged in intensive studies focusing on the suppression of penetration of hydrogen into steel sheet causing hydrogen embrittlement cracking so as to achieve the above object. As a result, the inventors discovered the technique of formulating a paint by a specific composition to enable reduction of penetration of hydrogen into steel sheet at the time of corrosion. Specifically, the inventors discovered that by including in the paint composition a specific amount of a nitrous acid salt, the nitrous acid ions ($NO_2^-$) is reduced preferentially over hydrogen whereby the generation of hydrogen causing hydrogen embrittlement cracking could be suppressed.

The present invention was completed based on such a discovery and includes the various aspects of the organic coated steel sheet explained above.

First, preferred embodiments of the organic coated steel sheet of the present invention will be explained in detail.

[Organic Coated Steel Sheet]

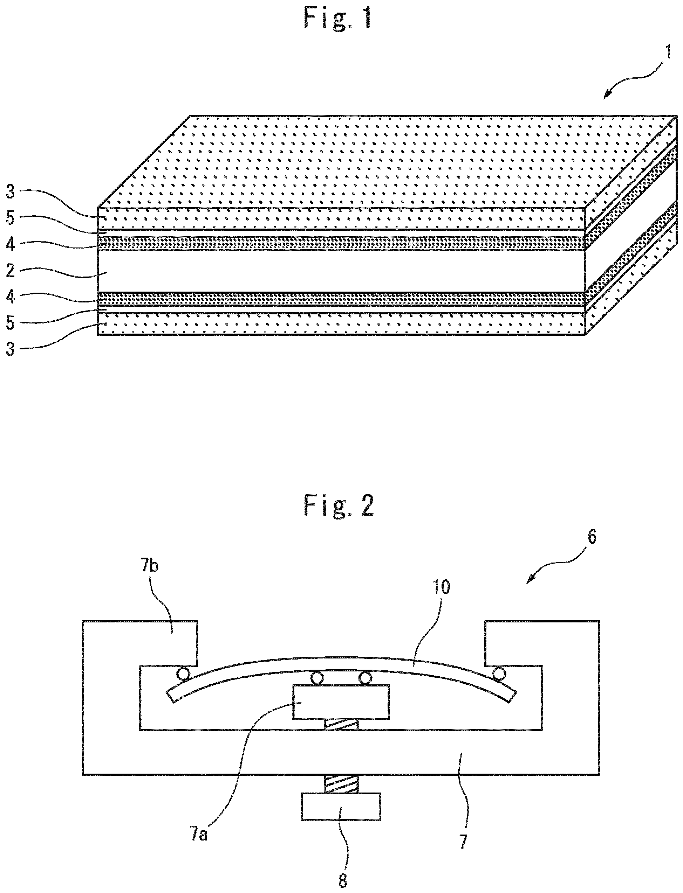

The organic coated steel sheet 1 according to one embodiment of the present invention, as shown in FIG. 1, has a pair of surfaces facing each other in the thickness direction and is provided with a tensile strength 980 MPa or more steel sheet 2 and an organic coating layer 3 arranged on each of the two surfaces of the steel sheet 2 as basic components.

Further, in the present embodiment, the organic coated steel sheet 1, as shown in FIG. 1, is further provided with plating layers 4 arranged between the steel sheet 2 and the organic coating layers 3 and with chemical conversion coatings 5 arranged between the plating layers 4 and the organic coating layers 3.

Here, in this Description, the term "arranged at least at part of the surface of the steel sheet" is used in the sense of not only an aspect of being directly arranged on the surface of at least part of the surface of the steel sheet, but including an aspect of being indirectly arranged on the surface of at least part of the surface of the steel sheet through another layer (for example, plating layer etc.) or coating (for example, chemical conversion coating etc.) If having such another layer or coating on the surface of the steel sheet, the "surface of the steel sheet" indicates the interface of the steel sheet and the other layer or coating.

Note that, in the organic coated steel sheet 1 shown in FIG. 1, an organic coating layer 3 is arranged on each of the two surfaces of the steel sheet 2 through a plating layer 4 and chemical conversion coating 5, but the invention is not limited to such an aspect. That is, an organic coating layer 3 may also be arranged on each of the two surfaces of the steel sheet 2 through or not through a plating layer 4 and chemical conversion coating 5 or may also be arranged on just either one surface of the steel sheet 2 through or not through a plating layer 4 and chemical conversion coating 5. Further, in the organic coated steel sheet 1 shown in FIG. 1, each organic coating layer 3 is arranged over the entirety of the surface of the steel sheet 2, but the invention is not limited to such an aspect. That is, each organic coating layer 3 may also be arranged over the entirety of the surface 2 as shown in FIG. 1 or may be arranged only at part of the surface of the steel sheet 2.

Further, in the organic coated steel sheet 1 of the present embodiment, an organic coating layer 3 includes a nitrous acid salt as a nitrous acid radical in 1 to 30 mass% and 0.05 g/m$^2$ or more content. In this way, by the organic coating layer 3 containing a specific amount of a nitrous acid salt, the nitrous acid ions ($NO_2^-$) of the nitrous acid salt of the organic coating layer 3 are reduced preferentially over hydrogen, whereby it is possible to make the generation of the hydrogen causing hydrogen embrittlement cracking more difficult. Due to this, the organic coated steel sheet 1 of the present embodiment becomes high strength steel sheet able to suppress hydrogen embrittlement cracking.

Note that, in the organic coated steel sheet 1, having layers or coatings other than the above-mentioned steel sheet 2 and organic coating layers 3 (that is, the plating layers 4 and the chemical conversion coatings 5) is not an essential constituent requirement. Therefore, the organic coated steel sheet 1 may have or may not have any layers or coatings other than the above-mentioned steel sheet 2 and organic coating layers 3 in accordance with the features demanded from the final products applied to etc.

Below, the various constituent elements of the organic coated steel sheet 1 will be explained in further detail.

(Steel Sheet)

In the organic coated steel sheet 1, the base material steel sheet 2 is steel sheet with a tensile strength (TS) of 980 MPa or more. In general, it is known that steel sheet has greater susceptibility to hydrogen embrittlement the higher the strength. However, the organic coated steel sheet 1 of the present embodiment can make even high strength steel sheet with a tensile strength of the steel sheet 2 of 980 MPa or more resistant to the generation of hydrogen causing hydrogen embrittlement cracking by a specific amount of a nitrous acid salt contained in the organic coating layers 3 as explained above, so can be preferably used as a material of various structural parts in which such high strength is sought.

The tensile strength of the steel sheet 2 is not particularly limited so long as being 980 MPa or more, but is preferably 1200 MPa (that is, 1.2 GPa) or more, more preferably 1300 MPa (that is, 1.3 GPa) or more, still more preferably 1400 MPa (that is, 1.4 GPa) or more. Note that, the upper limit of the tensile strength of the steel sheet 2 is not particularly limited, but from the viewpoint of toughness and shapeability is, for example, 4000 MPa (that is, 4.0 GPa) or less, preferably 3000 MPa (that is, 3.0 GPa) or less.

Among these, the tensile strength of the steel sheet 2 is preferably 1.2 to 3.0 GPa. If the tensile strength of the steel sheet becomes 1.2 GPa or more, it is known that there is a possibility of a fine amount of hydrogen, on the order of several ppm by mass, leading to fracture. In particular, in the automotive field, along with higher strength of steel sheet, sufficient reduction of the risk of hydrogen embrittlement cracking is being sought. The organic coated steel sheet 1 of the present embodiment can make generation of the hydrogen causing hydrogen embrittlement cracking difficult even with steel sheet with a tensile strength of the steel sheet 2 of 1.2 GPa or more, therefore can be suitably used as a material for various structural parts in the automotive field. Further, if the tensile strength of the steel sheet 2 is 3.0 GPa or less, it is possible to make the organic coated steel sheet 1 excellent in toughness and shapeability.

The tensile strength (TS) of the steel sheet can be measured by cutting out a No. 5 tensile test piece of JIS Z2241: 2011 from the steel sheet and performing a tensile test compliant with JIS Z2241: 2011. Note that the test piece is preferably cut out from the steel sheet so that the longitudinal direction of the test piece becomes a direction perpendicular to the rolling direction of the steel sheet. For example, if it is difficult to obtain a JIS No. 5 test piece due to limitations on the dimensions, it is possible to use another test piece described in JIS Z2241: 2011. However, for suitable evaluation, a thickness of the steel sheet of 0.5 mm is made the lower limit. Furthermore, if obtaining a JIS No. 5 test piece is difficult due to dimensional restrictions and use of another test piece described in JIS Z2241: 2011 would also be difficult, it is possible to perform a micro Vickers test compliant with JIS Z 2244-1: 2020 and the value of that hardness (HV) converted to tensile strength. The sample supplied to the micro Vickers test can be prepared in the following way. First, a sample is cut out from any position 50 mm or more away from the end faces of the steel sheet and other than a worked part so that a sheet thickness cross-section vertical to the sheet surface can be examined. If not able to obtain a sample from that position, the sample is cut out from a position away from the end parts. The sheet thickness cross-section is preferably parallel to the rolling direction. The size of the sample, while depending on the measurement apparatus, is made a size enabling examination of about 10 mm in a direction vertical to the sheet thickness direction. The cross-section of the thus cut out sample is polished using a #600 to #1500 silicon carbide paper. Further, the polished cross-section is then finished to a mirror surface using a solution of particle size 1 to 6 $\mu$m diamond powder dispersed in alcohol or other diluent or pure water. Next, that cross-section is finished to an examined surface by electrolytic polishing. The micro Vickers test may be used to measure 30 points at a sheet thickness 1/4 position by a load of 500 gf and the average value of these used. The Vickers hardness obtained by the micro Vickers test may be converted to tensile strength by the following formula:

$$\text{Tensile strength [MPa]} = 3.12 \times \text{Vickers hardness [HV]} + 16$$

Note that, the steel sheet 2 is not particularly limited in points other than the tensile strength. Any steel sheet corresponding to the desired mechanical properties etc. can be employed. For example, the thickness of the steel sheet 2 is not particularly limited, but may be made 0.2 mm to 10.0 mm or so.

(Organic Coating Layer)

In the organic coated steel sheet 1, an organic coating layer 3 contains a nitrous acid salt as a nitrous acid radical in 1 to 30 mass% and 0.05 g/m$^2$ or more content. By the organic coating layer 3 containing such a specific amount of a nitrous acid salt, the nitrous acid ions ($NO_2^-$) of the nitrous acid salt of the organic coating layer 3 are preferentially reduced over hydrogen whereby generation of the hydrogen causing hydrogen embrittlement cracking can be made harder.

The nitrous acid salt used in the organic coated steel sheet 1 of the present embodiment is not particularly limited. For example, an alkali metal salt, alkali earth metal salt, ammonium salt, etc. of nitrous acid may be mentioned. Specifically, a lithium salt, sodium salt, potassium salt, magnesium salt, calcium salt, strontium salt barium salt, ammonium salt, etc. of nitrous acid may be mentioned. Among these as well, from the viewpoint of the effect due to the above-mentioned nitrous acid salt being obtained higher, the nitrous acid salt is preferably at least one selected from the group comprising a lithium salt, sodium salt, potassium salt, magnesium salt, calcium salt, strontium salt, barium salat, and ammonium salt of nitrous acid.

The nitrous acid salt of an organic coating layer may be identified by a known method. For example, it can be performed by an element distribution image of an SEM-EDS. Specifically, first, a cross-section running along the sheet thickness direction of the organic coated steel sheet is adjusted to become flat by mechanical polishing. Next, colloidal polishing is used to chemically polish the surface of the organic coated steel sheet. The surface is polished until becoming a mirror surface in state.

The cross-section of an organic coated steel sheet after polishing is examined by an SEM. Specifically, an element distribution image is captured by a magnification of 5000X (vertical 200 $\mu$m, horizontal 200 $\mu$m region) using an SEM-EDS. In this element distribution image, if an element relating to the positive ions of the nitrous acid salt is detected in a gram equivalent of 90% or more with respect to the gram equivalent (100%) of the separately measured nitrous acid radical, it is judged that there is a nitrous acid salt in the organic coating layer. Note that, if several elements relating to the positive ions of the nitrous acid salt are detected, this is judged by the total gram equivalents of these. The elements can be analyzed and quantified using EPMA (electron probe microanalysis) or GDS (glow discharge spectrometry).

Note that, a gram equivalent of the nitrous acid radical (eq) in an organic coating layer can be found from the content measured by colorimetry utilizing color formation by later explained diazotization.

The content of the nitrous acid salt contained in an organic coating layer 3 is not particularly limited so long as a content as a nitrous acid radical of 1 to 30 mass% and 0.05 g/m$^2$ or more. The greater the content of a nitrous acid salt as a nitrous acid radical the more preferable from the viewpoint that a higher effect is easily obtained. Specifically, 5 mass% or more is preferable as the content with respect to the total mass of the organic coating layer (that is, the mass of the total solids content of the organic coating layer). The content of the nitrous acid salt may also be 10 mass% or more, 15 mass% or more, 20 mass% or more, or 25 mass% or more. However, from the viewpoint of the solubility product, if the content of the nitrous acid salt exceeds 30 mass%, it becomes no longer possible to stably produce an organic coated steel sheet, so the upper limit is made 30 mass%.

Further, from the viewpoint of ease of a higher effect being obtained, the content of a nitrous acid radical of a nitrous acid salt is preferably 0.50 g/m$^2$ or more as content per surface area of the steel sheet, more preferably 1.00 g/m$^2$ or more, still more preferably 5.00 g/m$^2$ or more. Note that the upper limit of the content of nitrous acid salt per surface area of the steel sheet is not particularly prescribed, but for example is 10.00 g/m$^2$ .

An organic coating layer 3 includes a resin as a base coating. Further, constituents other than nitrous acid salt may be contained within a range not obstructing the effect of the present invention. As such constituents, for example, coloring pigments, rust-proofing pigments, dispersants, leveling agents, lubricants and other additives, diluting solvents, etc. may be mentioned.

The resin able to be contained in an organic coating layer is not particularly limited, but one functioning as a binder for binding the constituents contained in the organic coating layer is preferable. For example, a solvent-based resin dissolved or dispersed in an organic solvent, a water-based resin dissolved or dispersed in water, etc. may be mentioned.

The solvent-based resin is not particularly limited, but, for example, a polyester resin, urethane resin, epoxy resin, acryl resin, a mixed resin of two or more resins among these, etc. may be mentioned. Note that the resin may be a cross-linking resin having a cross-linked structure or may be a noncross-linking resin not having a cross-linked structure. If imparting a cross-linked structure to a resin, as the cross-linking agent used for the cross-linking (curing agent), a water-soluble cross-linking agent is preferable. As specific cross-linking agents, melamine, isocyanate, etc. may be mentioned.

On the other hand, the water-based resin is not particularly limited, but, for example, one having the ability to dissolve in water or disperse in water such as a polyester resin, urethane resin, acryl resin, epoxy resin, phenol resin, a mixed resin of two or more of these etc. may be mentioned.

The content of the resin able to be contained in an organic coating layer is not particularly limited, but, for example, is 10 to 90 mass% with respect to the total mass of the organic coating layer (that is, the mass of the total solids content of the organic coating layer). From the viewpoint of expressing the function as a binder and realizing both of adhesion with adjoining layers, coatings, or steel sheet and corrosion resistance, the content of the resin is preferably 20 to 80 mass% with respect to the total mass of the organic coating layer, more preferably 25 to 75 mass%.

Note that, the coloring pigment able to be contained in an organic coating layer is not particularly limited. Any coloring pigment can be employed corresponding to the desired appearance and design sense etc. As such a coloring pigment, for example, an aluminum pigment, carbon black, silica, titania, zirconia, etc. may be mentioned. The content of the coloring pigment is not particularly limited, but, for example, a content of about 1 to 60 mass% with respect to the total mass of the organic coating layer may be mentioned.

The rust-proofing pigment able to be contained in an organic coating layer is not particularly limited, but, for example, aluminum tripolyphosphate; a Zn salt, Mg salt, Al salt, Ti salt, Zr salt, or Ce salt of phosphoric acid or phosphorous acid; hydrocalumited phosphoric acid compound; Ca ion exchanged silica; amorphous silica; etc. may be mentioned. The content of the rust-proofing pigment is not particularly limited, but, for example, a content of about 1 to 40 mass% with respect to the total mass of the organic coating layer may be mentioned.

The lubricant able to be contained in an organic coating layer is not particularly limited, but for example polyolefin wax, paraffin wax, a fluororesin-based wax, etc. may be mentioned. The content of the lubricant is not particularly limited, but, for example, a content of about 0.1 to 10 mass% with respect to the total mass of the organic coating layer may be mentioned.

The amount of deposition of an organic coating layer (that is, the mass per unit area of the total solids content of the organic coating layer) is not particularly limited, but for example is an amount of deposition of 2 to 20 $g/m^2$ or so. If the amount of deposition of the organic coating layer is within this range, the adhesion with the layer adjoining the organic coating layer, coating, or steel sheet becomes excellent and the above-mentioned effect due to the nitrous acid salt can be more reliably obtained. Note that, the amount of deposition of the organic coating layer is preferably 2 to 15 $g/m^2$ .

Further, the thickness of an organic coating layer is not particularly limited, but for example a 1 to 50 $\mu$m or so thickness may be mentioned. The thickness of the organic coating layer is preferably 3 $\mu$m or more, more preferably 5 $\mu$m or more, still more preferably 10 $\mu$m or more, from the viewpoint of adhesion and corrosion resistance and the effect of the above-mentioned nitrous acid salt. Further, the thickness of the organic coating layer is preferably 30 $\mu$m or less.

Note that, an organic coating layer, as explained above, may be arranged on each of the two surfaces of the steel sheet through or not through a plating layer and chemical conversion coating or may be arranged on only either one surface of the steel sheet through or not through a plating layer and chemical conversion coating. Further, the organic coating layer, as explained above, may be arranged over the entirety of a surface of the steel sheet or may be arranged at only part of a surface of the steel sheet.

The method of formation of an organic coating layer is not particularly limited, but the organic coating layer can be formed by preparing a paint composition including at least the above such specific amount of a nitrous acid salt, then coating that paint composition on a surface of the steel sheet or a plating layer or chemical conversion coating formed on a surface of the steel sheet and heating the same to dry it. Note that, the means for coating the paint composition is not particularly limited, but for example electrodeposition painting, powder painting, solvent painting, or any other painting treatment can be employed.

Note that, an organic coating layer may have a single-layer structure comprised of an independent layer or may have a multi-layer structure comprised of several layers. If the organic coating layer has a multi-layer structure, as examples of the multi-layer structure, a multi-layer structure comprised of a bottom layer, middle layer, and top layer etc. may be mentioned.

(Plating Layer)

In the organic coated steel sheet 1 shown in FIG. 1, plating layers 4 are formed on the two surfaces of the steel sheet 2 and are arranged between the steel sheet 2 and organic coating layers 3. More specifically, the organic coated steel sheet 1 has chemical conversion coatings 5 arranged between the steel sheet 2 and organic coating layers 3 and has plating layers 4 arranged between the chemical conversion coatings 5 and the steel sheets 2. Note that, in the organic coated steel sheet 1, having chemical conversion coatings 5 is not an essential constituent requirement, therefore the above-mentioned organic coating layers 3 may also be directly arranged on the surfaces of the plating layers 4.

In general, formation of a galvanized or other plating layer results in easy generation of hydrogen and as a result a higher risk of causing hydrogen embrittlement cracking. However, the organic coated steel sheet 1 of the present embodiment, even if having the plating layer 4, can make generation of the hydrogen causing hydrogen embrittlement cracking harder by the specific amount of the nitrous acid salt contained in an organic coating layer as explained above, therefore it is possible to enjoy the advantages of the presence of the plating layer 4 (for example, improvement of the corrosion resistance etc.) while suppressing hydrogen embrittlement cracking.

A plating layer 4 may be either of a hot dip coated layer or an electroplated layer. Further, as the hot dip coated layer, for example, a hot dip galvanized layer (GI), hot dip galvannealed layer (GA), hot dip aluminum coated layer, hot dip Zn-Al alloy coated layer, hot dip Zn-Al-Mg alloy coated layer, hot dip Zn-Al-Mg-Si alloy coated layer, etc. may be mentioned. Further, as the electroplating layer, for example, an electrogalvanized layer (EG), electro Zn-Ni alloy plating layer, etc. may be mentioned. Among these, the plating layer is preferably a hot dip galvanized layer, hot dip galvannealed layer, or electrogalvanized layer.

The amount of deposition of a plating layer is not particularly limited, but for example an amount of deposition of 10 to 180 $g/m^2$ or so per surface may be mentioned. The amount of deposition of the plating layer is determined by dissolving the plating layer in an acid solution to which an inhibitor suppressing corrosion of the back iron is added and calculating the change in weight before and after pickling.

Further, the thickness of a plating layer is not particularly limited, but for example a 3 to 50 $\mu$m or so thickness may be mentioned.

Note that, in the organic coated steel sheet 1 shown in FIG. 1, a plating layer 4 is arranged at each of the two surfaces of the steel sheet 2, but the invention is not limited to such an aspect. That is, a plating layer 4, as shown in FIG. 1, may be arranged at each of the two surfaces of the steel sheet 2 or may be arranged at only one of the surfaces of the steel sheet 2. Further, in the organic coated steel sheet 1 shown in FIG. 1, a plating layer 4 is arranged over the entirety of the surface of the steel sheet 2, but the invention is limited to such an aspect. That is, a plating layer 4 may be arranged over the entirety of the surface of the steel sheet 2 or may be arranged only at part of the surface of the steel sheet 2.

Note that, in the organic coated steel sheet of the present invention, having the plating layers is not an essential constituent requirement. Therefore, the organic coated steel sheet of the present invention may have or may not have any plating layer in accordance with the features demanded from the final product applied to etc.

(Chemical Conversion Coating)

In the organic coated steel sheet 1 shown in FIG. 1, chemical conversion coatings 5 are formed on the surfaces of the above-mentioned plating layers 4 and are arranged between the plating layers 4 and organic coating layers 3. Note that, in the organic coated steel sheet 1, having plating layers 4 is not an essential constituent requirement, therefore the above-mentioned chemical conversion coatings 5 may also be directly arranged on the surfaces of the steel sheet 2.

A chemical conversion coating 5 functions so that a barrier property with respect to moisture or corrosive ions or other corrosive factors or adhesion etc. is improved and a result it is possible to improve the corrosion resistance of the organic coated steel sheet 1.

The constituents forming a chemical conversion coating 5 are not particularly limited, but for example phosphoric acid, a phosphoric acid salt, silica, fluoride, vanadium compound, silane coupling agent, zirconium compound, resin, tannin, tannic acid, etc. may be mentioned. Among these constituents, at least one constituent selected from the group comprised of phosphoric acid, a phosphoric acid salt, silica, fluoride, and vanadium compound is preferable. If the chemical conversion coating is formed by such constituents, the chemical conversion coating will function as an inhibitor and a precipitated coating or passive coating can be formed on the surface of the plating layer or steel sheet to further improve the corrosion resistance.

As an example of the phosphoric acid salt able to be used for formation of a chemical conversion coating, a crystalline or amorphous phosphoric acid salt may be mentioned. More specifically, as a crystalline phosphoric acid salt, for example, zinc phosphate, zinc ferrous phosphate, manganese phosphate, manganese ferrous phosphate, zinc calcium phosphate, etc. may be mentioned. As an amorphous phosphoric acid salt, for example, iron phosphoric, stannous phosphate, zirconium phosphate, titanium phosphate, hafnium phosphate, etc. may be mentioned.

Further, as examples of fluorides able to be used for formation of a chemical conversion coating, zirconium fluoride, titanium fluoride, hafnium fluoride, indium fluoride, etc. may be mentioned. Furthermore, an examples of vanadium compounds used for formation of the chemical conversion coating, vanadium oxide etc. may be mentioned.

A chemical conversion coating may include a nitrous acid salt similar to the above-mentioned organic coating layer. In this case, the content of the nitrous acid salt contained in the chemical conversion coating is not particularly limited, but for example a content of 1 to 30 mass% or so with respect to the total mass of the chemical conversion coating (that is, mass of total solids content of chemical conversion coating) may be mentioned. If the chemical conversion coating also contains such a nitrous acid salt, it is possible to make the hydrogen causing hydrogen embrittlement cracking further harder to be generated.

The amount of deposition of a chemical conversion coating (that is, the mass per unit area of the total solids content of the chemical conversion coating) is due to the constituents forming the same. It is not particularly limited, but for example an amount of deposition of about 10 to 2000 $mg/m^2$ or so per surface may be mentioned. The amount of chemical conversion coating is preferably 100 to 1500 $mg/m^2$ .

Note that, the amount of deposition of a chemical conversion coating can be measured by fluorescent X-ray analysis or other known analysis method. For example, it is possible to use samples with amounts of deposition of phosphorus known by chemical analysis to prepare in advance a calibration curve showing the relationship between the fluorescent X-ray intensity and amount of deposition and to use this calibration curve to determine the amount of deposition of the chemical conversion coating from the results of measurement of the fluorescent X-ray intensity.

Further, the thickness of a chemical conversion coating is due to the constituents forming the same. It is not particularly limited, but for example a 0.01 to 5.00 μm or so thickness may be mentioned. The thickness of the chemical conversion coating is preferably 0.03 to 3.00 μm.

Note that, in the organic coated steel sheet 1 shown in FIG. 1, chemical conversion coatings 5 are arranged on the two surfaces of the steel sheet 2 through plating layers 4, but the invention is not limited to such an aspect. That is, chemical conversion coatings 5 may be arranged on the two surfaces of the steel sheet 2 as shown in FIG. 1 through or not through plating layers 4 or one may be arrange on just either one surface of the steel sheet 2 through or not through a plating layer 4. Further, in FIG. 1, the chemical conversion coatings 5 are arranged over the entireties of the surfaces of the steel sheet 2, but the invention is not limited to such an aspect. That is, the organic coating layers 3 may be arranged over the entireties of the surfaces of the steel sheet 2 as shown in FIG. 1 or may be arranged only at part of the surfaces of the steel sheet 2.

The method of formation of a chemical conversion coating is not particularly limited, but for example a chemical conversion coating can be formed in the following way. A surface of the steel sheet or a surface of a plating layer forming a surface for formation of the chemical conversion coating is subjected to a known degreasing treatment and washing treatment to remove the deposited oil or other impurities or surface oxide. Next, this surface is coated with or dipped in a composition for formation of a chemical conversion coating containing the above-mentioned constituents. Further, the composition deposited on the surface can be dried under any conditions to thereby form a chemical conversion coating.

Note that, in the organic coated steel sheet of the present invention, having chemical conversion coatings is not an essential constituent requirement. Therefore, the organic coated steel sheet of the present invention may have or may not have any chemical conversion layer in accordance with the features demanded from the final product applied to etc.

(Other Coatings)

Above, the various component elements of the organic coated steel sheet 1 of the present embodiment were explained while referring to FIG. 1, but the organic coated steel sheet of the present invention is not limited to the constitution shown in such FIG. 1. For example, the organic coated steel sheet may also have undercoatings or other functional coatings between the steel sheet and the organic coating layers for improvement of the adhesion and corrosion resistance.

As examples of an undercoat coating, a chromate coating, undercoat coating not substantially containing chromium (that is, a chromate-free coating) etc. may be mentioned. Note that, a chromate-free coating can, for example, be formed using a silica-based treatment solution having liquid phase silica, gaseous phase silica, silicic acid salt, or other silicon compound as its main coating constituent or a zirconium-based treatment solution having a zirconium-based compound as its main coating constituent or other treatment solution. These treatment solutions may also be treatment solutions containing an organic resin copresent with the main coating constituent.

As the amount of deposition of an undercoat coating (that is, the mass per unit area of the total solids content of the undercoat coating), any amount of deposition corresponding to the treatment solution used can be employed. For example, in the case of an undercoat coating obtained by a silica-based treatment solution, the amount of deposition can be made a 1 to 20 mg/m$^2$ or so amount of deposition by Si conversion.

(Examples of Application of Organic Coated Steel Sheet)

As explained above, the organic coated steel sheet of the present invention is high strength steel sheet able to suppress hydrogen embrittlement cracking, so can be worked into shaped articles etc. and used as various structural parts of transport machinery, first and foremost automobiles, and industrial machinery, household electrical appliances, etc., and as structural members for construction and other various fields.

Among these, the organic coated steel sheet of the present invention is preferably used as a structural member in the automotive field. Steel sheet used for a structural member in the automotive field is often used in a corrosive atmospheric environment. The hydrogen embrittlement cracking due to penetration of hydrogen occurring in such an environment can become a major problem. For this reason, the effect of the present invention of being able to suppress hydrogen embrittlement crack can be particularly suitably exhibited when applying the organic coated steel sheet of the present invention to a structural member in the automotive field.

Further, if applying the organic coated steel sheet of the present invention to structural members in various fields as mentioned above, the shaping methods are not particularly limited. Any shaping methods can be employed corresponding to the structures, characteristics, etc. of the structural members applied to. As examples of such shaping methods, while not particularly limited to these, cold pressing etc. may be mentioned.

The present invention includes a shaped article obtained by using any of the above shaping methods to form the above-mentioned organic coated steel sheet into a predetermined shape. That is, the present invention includes a shaped article configured using the organic coated steel sheet 1 of the above embodiment as a separate embodiment different from, the above.

[Shaped Article]

Below, a shaped article configured using the organic coated steel sheet 1 of the above embodiment will be explained as another embodiment of the present invention.

The shaped article of the present embodiment can be obtained by shaping by any shaping method and shaping conditions an organic coated steel sheet 1 of the above-mentioned embodiment, that is, an organic coated steel sheet 1 provided with a tensile strength 980 MPa or more steel sheet 2 and plating layers 4, chemical conversion coatings 5, and organic coating layers 3 arranged at each of the two surfaces of that steel sheet 2. Alternatively, the shaped article of the present embodiment can be obtained by forming on a shaped article formed in advance by any shaping method and shaping conditions organic coating layers similar to the organic coating layers 3 of the organic coated steel sheet 1 of the above embodiment.

Note that, in the latter case, the specific method of production of the shaped article before formation of the organic coating layer is not particularly limited. For example, hot stamping or other generally used shaping methods and the usual shaping conditions corresponding to those shaping methods can be employed. For example, if using hot stamping to produce a shaped article, the shaped article can be produced by heating steel sheet to a predetermined temperature region and holding time, then hot stamping it in the predetermined temperature region.

The shaped article of the present embodiment also becomes a high strength shaped article able to suppress hydrogen embrittlement cracking, so can be suitably used as various structural parts of the above-mentioned transport machinery, first and foremost automobiles, and industrial machinery, household electrical appliances, etc., and as structural members for various structures for construction and other various fields.

The organic coated steel sheet of the present invention and shaped article using the same and shaped article obtained by forming an organic coating layer on a shaped article are not limited to the embodiments explained above or the embodiments explained later etc. and can be suitably combined or substituted, changed, etc. within a scope not deviating from the object and gist of the present invention.

EXAMPLES

Below, examples will be illustrated to explain the present invention more specifically, but the present invention is not limited to such examples.

To verify the effect of the present invention, as test materials, nonplated steel sheet and galvanized steel sheet with steel constituents shown in the following Table 1 and Table 2 and with tensile strengths of 1470 MPa to 3000 MPa were respectively prepared and processed in accordance with the following procedures to fabricate samples of organic coated steel sheet as examples of the present invention.

(Pretreatment Step)

The steel sheet of the test material was dipped in an aqueous solution containing a water-based alkali degreaser ("FC-301" made by Nihon Parkerizing Co., Ltd.) in 2.5 mass% at 40°C temperature for 2 minutes to degrease the surface of the steel sheet. Further, the degreased steel sheet was rinsed with water and dried.

(Chemical Conversion Step)

A solid nitrous acid salt was made to dissolve in a zinc-phosphate-based chemical conversion solution ("Surfdine SD5350" made by Nippon Paint Industrial Coatings Co., Ltd.) The dipping time was adjusted so that the amount of deposition of the zinc phosphate coating became 2.3 g/m$^2$ . After that, the steel sheet after the above pretreatment step was transferred to a hot air furnace and dried in a state giving a peak temperature of the surface of 70°C so as to form a predetermined amount of deposition of a zinc phosphate coating (that is, chemical conversion coating) on each of the surfaces of the steel sheet.

(Painting Step)

The steel sheet after the above-mentioned chemical conversion step was coated with a paint composition including the following base coating and nitrous acid salt-containing pigment so as to form an organic coating layer on the steel sheet. Note that, the Sample No. 1 steel sheet of Table 3 is steel sheet not subjected to this painting step and not formed with an organic coating layer. This steel sheet includes the nitrous acid salt sodium nitrite in the chemical conversion coating.

For the base coating, a polyester-based clear paint obtained in the following way was used. This polyester-based clear paint was prepared by adding to a solution of a commercially available organic solvent soluble type of amorphous polyester resin "Vylon® GK140" made by Toyobo Corporation dissolved in an organic solvent (organic solvent comprised of Sorbesso® 150 and cyclohexanone mixed in a ratio of mass ratio 1:1), a cross-linking agent comprised of a commercially available hexamethoxymethylmelamine "Cymel® 303" made by Mitsui Cytec Co., Ltd. in 15 parts by mass with respect to 100 parts by mass of the solids content of the polyester resin and further adding the commercially available acidic catalyst "Catalyst® 6003B" made by Mitsui Cytec Co., Ltd. in 0.5 part by mass.

The nitrous acid salt-containing pigment was adjusted so that the content of the nitrous acid salt in the organic coating layer became a numerical value, as a nitrous acid radical, of content converted to ions of salt contained in the organic coating layers of Tables 3 to 8. Specifically, it was adjusted by adding a commercially available pigment to the aqueous solution in which solid nitrous acid salt was dissolved and stirring the same to mix them. The types of the nitrous acid salt used are shown in the following Table 3 to Table 8 as "salt contained in organic coating layer". Note that, in Sample No. 2 of Table 3, the organic coating layer did not contain the nitrous acid salt or other salt. This steel sheet contained the nitrous acid salt sodium nitrite in the chemical conversion coating. In the steel sheets of Sample Nos. 49 and 50 of Table 4, the organic coating layer contained sodium chloride and sodium nitrate instead of the nitrous acid salt. These steel sheets, in the same way as the chemical conversion coatings, contained sodium chloride and sodium nitrate.

Further, the paint composition is prepared by mixing into the above base coating the above-mentioned nitrous acid salt-containing pigment in a mass ratio of a ratio of 7:3 and sufficiently stirring by a stirring machine to make it disperse. Note that, the mass ratio is the mass ratio of the solids content after removal of the solvent content.

The thus prepared paint composition was coated on the surface of the steel sheet after the chemical conversion step by the bar coat method. After that, the steel sheet was transferred to a hot air furnace to be dried and is air dried in a state with the peak temperature of the steel sheet surface reaching 230°C to form an organic coating layer on the surface of the steel sheet. Note that, in this painting step, the dilution conditions and bar number were adjusted to give thicknesses of the organic coating layers formed of respectively 1 μm, 3 μm, 5 μm, 10 μm, 15 μm, 20 μm, and 30 μm.

The sample of the organic coated steel sheet after the above pretreatment step, chemical conversion step, and painting step was analyzed for organic coating layer and evaluated for hydrogen embrittlement cracking in the following way. The results are shown in the following Table 3 to Table 8.

(Analysis of Nitrous Acid Radical in Organic Coating Layer)

First, an organic coating layer was taken from a sample of the organic coated steel sheet to be analyzed and is rendered uniform by a Polytron homogenizer and extracted under weak alkali conditions. Further, from that extract, the resin constituents were removed by suction filtration, then colorimetry utilizing color formation by diazotization was used to measure the content of the nitrous acid radical in the organic coating layer (ion conversion content g/m$^2$ of salt contained in organic coating layer). Note that, when taking the organic coating layer from a sample of the organic coated steel sheet to be analyzed, the organic coating layer was taken from a part of the organic coated steel sheet other than the end parts, welded parts, worked parts, and parts affected by the same and defects in the organic coating layer formed. Note that, the amount taken was preferably as large as possible from the viewpoint of raising the detection sensitivity.

(Evaluation of Hydrogen Embrittlement Cracking)

The steel sheet to be evaluated was cut to obtain a 100 mm × 15 mm size plate. Next, the two ends of this plate in the longitudinal direction were ground down by 2.5 mm each by mechanical grinding to obtain a 100 mm × 10 mm size plate-shaped test piece. This test piece was subjected to a corrosion test by a method based on the JASO M 609-91 (Test Method for Corrosion of Material for Automobiles) standard to thereby make the test piece corrode and promote hydrogen embrittlement cracking. After corrosion, the test piece was given 1250 MPa stress corresponding to the YS using the apparatus 6 for evaluation of the hydrogen embrittlement cracking of steel sheet shown in FIG. 2 and measured for sheet thickness at the time the test piece broke.

Here, the apparatus 6 shown in FIG. 2 is provided with a holder 7 for holding a test piece 10 and a bolt 8 as a stress imparting means for imparting stress to the test piece 10. In the apparatus 6 shown in FIG. 2, the holder 7 is configured by a structure having a load jig 7a and a receiving jig 7b. It is configured so that a four-point bending test can be performed for bending the test piece 10 by the two support points of the load jig 7a and the two support points of the receiving jig 7b.

Further, before applying a 1250 MPa stress to the above-mentioned test piece, the bolt 8 of the apparatus 6 shown in FIG 2 is tightened to bend the steel sheet and find the conditions for the amount of tightening of the bolt 8 so that the targeted stress is applied to the projecting part of the bent steel sheet. Specifically, a strain gauge is attached in the tensile direction at the vertex of the projecting part of the above bent steel sheet. The relationship between strain at the vertex of the projecting part of the steel sheet due to the tightening of the bolt 8 causing the steel sheet to bend and the amount of tightening of the bolt 8 was measured in advance. Further, from the strain-stress curve, the value of the strain of the steel sheet at the stress desired to be imparted to the test piece was read and the bolt 8 tightened to give the value of the strain desired to be imparted.

Further, the hydrogen embrittlement cracking of each steel sheet was evaluated by checking for any hydrogen embrittlement cracking due to the corrosion test. Cracking of the steel sheet at the time of corrosion includes hydrogen embrittlement cracking and cracking due to reduction of thickness caused by the decrease in sheet thickness and drop in strength due to corrosion. The two are differentiated by using the sheet thickness of the test piece before corrosion and the sheet thickness at the time of causing the test piece after corrosion to fracture by the apparatus 6 shown in FIG. 2 so as to calculate the rate of reduction (%) of the sheet thickness from before to after corrosion and evaluating the rate of reduction of sheet thickness according to the following evaluation criteria. Note that, the sheet thickness at the time of causing the test piece after corrosion to fracture was measured at the part exposed from the opening part of the receiving jig 7b of the part sprayed by salt water in the corrosion test at the jig of FIG. 2. Specifically, the sheet thickness of the part within 1 cm to the left and right of the two support points of the load jig 7a forming the center of the test piece was measured.

Excellent: rate of reduction of sheet thickness of 30% or more (occurrence of not hydrogen embrittlement cracking, but cracking due to reduction in thickness)

Good: rate of reduction of sheet thickness of 20% or more and less than 30% (almost no occurrence of hydrogen embrittlement cracking)

Fair: rate of reduction of sheet thickness of 10% or more and less than 20% (little occurrence of hydrogen embrittlement cracking)

Poor: rate of reduction of sheet thickness of less than 10% (occurrence of hydrogen embrittlement cracking)

[Table 1]

| Test material nonplated steel sheet | Tensile strength (MPa) | Steel constituents (mass%) | | | | | | |
|---|---|---|---|---|---|---|---|---|
| | | C | Si | Mn | P | S | Al | B |
| A-0 | 1470 | 0.20 | 0.51 | 2.59 | 0.010 | 0.002 | 0.030 | 0.0018 |
| B-0 | 1800 | 0.31 | 0.51 | 2.58 | 0.011 | 0.005 | 0.040 | 0.0012 |
| C-0 | 2000 | 0.36 | 0.50 | 2.49 | 0.011 | 0.003 | 0.020 | 0.0030 |
| D-0 | 2500 | 0.50 | 0.49 | 2.53 | 0.009 | 0.006 | 0.040 | 0.0034 |
| E-0 | 3000 | 0.66 | 0.51 | 2.51 | 0.010 | 0.009 | 0.027 | 0.0031 |

[Table 2]

| Test material galvanized steel sheet | Tensile strength (MPa) | Steel constituents (mass%) | | | | | | |
|---|---|---|---|---|---|---|---|---|
| | | C | Si | Mn | P | S | Al | B |
| A-1 | 1470 | 0.22 | 0.48 | 2.60 | 0.008 | 0.001 | 0.033 | 0.0020 |
| B-1 | 1800 | 0.30 | 0.51 | 2.58 | 0.011 | 0.005 | 0.040 | 0.0012 |
| C-1 | 2000 | 0.35 | 0.50 | 2.49 | 0.011 | 0.003 | 0.020 | 0.0030 |
| D-1 | 2500 | 0.52 | 0.49 | 2.53 | 0.009 | 0.006 | 0.040 | 0.0034 |
| E-1 | 3000 | 0.67 | 0.51 | 2.51 | 0.010 | 0.009 | 0.027 | 0.0031 |

[Table 3]

| No. | Test material | Salt contained in organic coating layer | Thickness of organic coating layer ($\mu$m) | Content of organic coating layer by ion conversion | | Rate of reduction of sheet thickness (%) | Evaluation of hydrogen embrittlement cracking | Remarks |
|---|---|---|---|---|---|---|---|---|
| | | Type | | (g/m$^2$) | (mass%) | | | |
| 1 | A-0 | - | 0 | - | - | 5 | Poor | Comp. ex. |
| 2 | A-0 | - | 10 | 0.00 | 0 | 9 | Poor | Comp. ex. |

(continued)

| No. | Test material | Salt contained in organic coating layer Type | Thickness of organic coating layer ($\mu$m) | Content of organic coating layer by ion conversion (g/m$^2$) | (mass%) | Rate of reduction of sheet thickness (%) | Evaluation of hydrogen embrittlement cracking | Remarks |
|---|---|---|---|---|---|---|---|---|
| 3 | A-0 | NaNO$_2$ | 5 | 0.05 | 1 | 19 | Fair | Inv. ex. |
| 4 | A-0 | NaNO$_2$ | 1 | 0.05 | 5 | 26 | Good | Inv. ex. |
| 5 | A-0 | NaNO$_2$ | 3 | 0.15 | 5 | 27 | Good | Inv. ex. |
| 6 | A-0 | NaNO$_2$ | 5 | 0.25 | 5 | 25 | Good | Inv. ex. |
| 7 | A-0 | NaNO$_2$ | 10 | 0.50 | 5 | 29 | Good | Inv. ex. |
| 8 | A-0 | NaNO$_2$ | 15 | 0.75 | 5 | 26 | Good | Inv. ex. |
| 9 | A-0 | NaNO$_2$ | 20 | 1.00 | 5 | 31 | Excellent | Inv. ex. |
| 10 | A-0 | NaNO$_2$ | 30 | 1.50 | 5 | 36 | Excellent | Inv. ex. |
| 11 | A-0 | NaNO$_2$ | 1 | 0.10 | 10 | 25 | Good | Inv. ex. |
| 12 | A-0 | NaNO$_2$ | 3 | 0.30 | 10 | 29 | Good | Inv. ex. |
| 13 | A-0 | NaNO$_2$ | 5 | 0.50 | 10 | 27 | Good | Inv. ex. |
| 14 | A-0 | NaNO$_2$ | 10 | 1.00 | 10 | 30 | Excellent | Inv. ex. |
| 15 | A-0 | NaNO$_2$ | 15 | 1.50 | 10 | 37 | Excellent | Inv. ex. |
| 16 | A-0 | NaNO$_2$ | 20 | 2.00 | 10 | 34 | Excellent | Inv. ex. |
| 17 | A-0 | NaNO$_2$ | 30 | 3.00 | 10 | 35 | Excellent | Inv. ex. |
| 18 | A-0 | NaNO$_2$ | 1 | 0.30 | 30 | 27 | Good | Inv. ex. |
| 19 | A-0 | NaNO$_2$ | 3 | 0.90 | 30 | 23 | Good | Inv. ex. |
| 20 | A-0 | NaNO$_2$ | 5 | 1.50 | 30 | 34 | Excellent | Inv. ex. |
| 21 | A-0 | NaNO$_2$ | 10 | 3.00 | 30 | 33 | Excellent | Inv. ex. |
| 22 | A-0 | NaNO$_2$ | 15 | 4.50 | 30 | 31 | Excellent | Inv. ex. |
| 23 | A-0 | NaNO$_2$ | 20 | 6.00 | 30 | 39 | Excellent | Inv. ex. |
| 24 | A-0 | NaNO$_2$ | 30 | 9.00 | 30 | 37 | Excellent | Inv. ex. |
| 25 | A-0 | LiNO$_2$ | 10 | 0.10 | 1 | 24 | Good | Inv. ex. |
| 26 | A-0 | LiNO$_2$ | 10 | 0.50 | 5 | 23 | Good | Inv. ex. |
| 27 | A-0 | LiNO$_2$ | 10 | 1.00 | 10 | 30 | Excellent | Inv. ex. |
| 28 | A-0 | LiNO$_2$ | 10 | 3.00 | 30 | 32 | Excellent | Inv. ex. |
| 29 | A-0 | Mg(NO$_2$)$_2$ | 10 | 0.10 | 1 | 23 | Good | Inv. ex. |
| 30 | A-0 | Mg(NO$_2$)$_2$ | 10 | 0.50 | 5 | 25 | Good | Inv. ex. |
| 31 | A-0 | Mg(NO$_2$)$_2$ | 10 | 1.00 | 10 | 35 | Excellent | Inv. ex. |
| 32 | A-0 | Mg(NO$_2$)$_2$ | 10 | 3.00 | 30 | 38 | Excellent | Inv. ex. |

[Table 4]

| No. | Test material | Salt contained in organic coating layer Type | Thickness of organic coating layer ($\mu$m) | Content of organic coating layer by ion conversion | | Rate of reduction of sheet thickness (%) | Evaluation of hydrogen embrittlement cracking | Remarks |
|---|---|---|---|---|---|---|---|---|
| | | | | (g/m$^2$) | (mass%) | | | |
| 33 | A-0 | $KNO_2$ | 10 | 0.10 | 1 | 19 | Fair | Inv. ex. |
| 34 | A-0 | $KNO_2$ | 10 | 0.50 | 5 | 28 | Good | Inv. ex. |
| 35 | A-0 | $KNO_2$ | 10 | 1.00 | 10 | 32 | Excellent | Inv. ex. |
| 36 | A-0 | $KNO_2$ | 10 | 3.00 | 30 | 38 | Excellent | Inv. ex. |
| 37 | A-0 | $Ca(NO_2)_2$ | 10 | 0.10 | 1 | 17 | Fair | Inv. ex. |
| 38 | A-0 | $Ca(NO_2)_2$ | 10 | 0.50 | 5 | 26 | Good | Inv. ex. |
| 39 | A-0 | $Ca(NO_2)_2$ | 10 | 1.00 | 10 | 36 | Excellent | Inv. ex. |
| 40 | A-0 | $Ca(NO_2)_2$ | 10 | 3.00 | 30 | 35 | Excellent | Inv. ex. |
| 41 | A-0 | $NH_4NO_2$ | 10 | 0.10 | 1 | 15 | Fair | Inv. ex. |
| 42 | A-0 | $NH_4NO_2$ | 10 | 0.50 | 5 | 26 | Good | Inv. ex. |
| 43 | A-0 | $NH_4NO_2$ | 10 | 1.00 | 10 | 33 | Excellent | Inv. ex. |
| 44 | A-0 | $NH_4NO_2$ | 10 | 3.00 | 30 | 30 | Excellent | Inv. ex. |
| 45 | A-0 | $Sr(NO_2)_2$ | 10 | 0.10 | 1 | 15 | Fair | Inv. ex. |
| 46 | A-0 | $Sr(NO_2)_2$ | 10 | 0.50 | 5 | 21 | Good | Inv. ex. |
| 47 | A-0 | $Sr(NO_2)_2$ | 10 | 1.00 | 10 | 34 | Excellent | Inv. ex. |
| 48 | A-0 | $Sr(NO_2)_2$ | 10 | 3.00 | 30 | 30 | Excellent | Inv. ex. |
| 49 | A-0 | NaCl | 10 | 0.50 | 5 | 6 | Poor | Comp. ex. |
| 50 | A-0 | $NaNO_3$ | 10 | 0.50 | 5 | 8 | Poor | Comp. ex. |
| 51 | A-1 | $NaNO_2$ | 1 | 0.05 | 5 | 30 | Excellent | Inv. ex. |
| 52 | A-1 | $NaNO_2$ | 3 | 0.15 | 5 | 31 | Excellent | Inv. ex. |
| 53 | A-1 | $NaNO_2$ | 5 | 0.25 | 5 | 32 | Excellent | Inv. ex. |
| 54 | A-1 | $NaNO_2$ | 10 | 0.50 | 5 | 33 | Excellent | Inv. ex. |
| 55 | A-1 | $NaNO_2$ | 15 | 0.75 | 5 | 35 | Excellent | Inv. ex. |
| 56 | A-1 | $NaNO_2$ | 20 | 1.00 | 5 | 34 | Excellent | Inv. ex. |
| 57 | A-1 | $NaNO_2$ | 30 | 1.50 | 5 | 37 | Excellent | Inv. ex. |
| 58 | A-1 | $LiNO_2$ | 10 | 0.50 | 5 | 30 | Excellent | Inv. ex. |
| 59 | A-1 | $Mg(NO_2)_2$ | 10 | 0.50 | 5 | 29 | Good | Inv. ex. |
| 60 | A-1 | $KNO_2$ | 10 | 0.50 | 5 | 31 | Excellent | Inv. ex. |
| 61 | A-1 | $Ca(NO_2)_2$ | 10 | 0.50 | 5 | 31 | Excellent | Inv. ex. |
| 62 | A-1 | $NH_4NO_2$ | 10 | 0.50 | 5 | 30 | Excellent | Inv. ex. |
| 63 | A-1 | $Sr(NO_2)_2$ | 10 | 0.50 | 5 | 29 | Good | Inv. ex. |

[Table 5]

| No. | Test material | Salt contained in organic coating layer Type | Thickness of organic coating layer (μm) | Content of organic coating layer by ion conversion (g/m²) | Content of organic coating layer by ion conversion (mass%) | Rate of reduction of sheet thickness (%) | Evaluation of hydrogen embrittlement cracking | Remarks |
|---|---|---|---|---|---|---|---|---|
| 64 | B-0 | $NaNO_2$ | 1 | 0.05 | 5 | 22 | Good | Inv. ex. |
| 65 | B-0 | $NaNO_2$ | 3 | 0.15 | 5 | 21 | Good | Inv. ex. |
| 66 | B-0 | $NaNO_2$ | 5 | 0.25 | 5 | 23 | Good | Inv. ex. |
| 67 | B-0 | $NaNO_2$ | 10 | 0.50 | 5 | 25 | Good | Inv. ex. |
| 68 | B-0 | $NaNO_2$ | 15 | 0.75 | 5 | 27 | Good | Inv. ex. |
| 69 | B-0 | $NaNO_2$ | 20 | 1.00 | 5 | 26 | Good | Inv. ex. |
| 70 | B-0 | $NaNO_2$ | 30 | 1.50 | 5 | 30 | Excellent | Inv. ex. |
| 71 | B-0 | $LiNO_2$ | 10 | 0.50 | 5 | 24 | Good | Inv. ex. |
| 72 | B-0 | $Mg(NO_2)_2$ | 10 | 0.50 | 5 | 22 | Good | Inv. ex. |
| 73 | B-0 | $KNO_2$ | 10 | 0.50 | 5 | 21 | Good | Inv. ex. |
| 74 | B-0 | $Ca(NO_2)_2$ | 10 | 0.50 | 5 | 23 | Good | Inv. ex. |
| 75 | B-0 | $NH_4NO_2$ | 10 | 0.50 | 5 | 24 | Good | Inv. ex. |
| 76 | B-0 | $Sr(NO_2)_2$ | 10 | 0.50 | 5 | 22 | Good | Inv. ex. |
| 77 | B-1 | $NaNO_2$ | 1 | 0.05 | 5 | 26 | Good | Inv. ex. |
| 78 | B-1 | $NaNO_2$ | 3 | 0.15 | 5 | 25 | Good | Inv. ex. |
| 79 | B-1 | $NaNO_2$ | 5 | 0.25 | 5 | 28 | Good | Inv. ex. |
| 80 | B-1 | $NaNO_2$ | 10 | 0.50 | 5 | 30 | Excellent | Inv. ex. |
| 81 | B-1 | $NaNO_2$ | 15 | 0.75 | 5 | 29 | Good | Inv. ex. |
| 82 | B-1 | $NaNO_2$ | 20 | 1.00 | 5 | 30 | Excellent | Inv. ex. |
| 83 | B-1 | $NaNO_2$ | 30 | 1.50 | 5 | 33 | Excellent | Inv. ex. |
| 84 | B-1 | $LiNO_2$ | 10 | 0.50 | 5 | 26 | Good | Inv. ex. |
| 85 | B-1 | $Mg(NO_2)_2$ | 10 | 0.50 | 5 | 27 | Good | Inv. ex. |
| 86 | B-1 | $KNO_2$ | 10 | 0.50 | 5 | 25 | Good | Inv. ex. |
| 87 | B-1 | $Ca(NO_2)_2$ | 10 | 0.50 | 5 | 24 | Good | Inv. ex. |
| 88 | B-1 | $NH_4NO_2$ | 10 | 0.50 | 5 | 26 | Good | Inv. ex. |
| 89 | B-1 | $Sr(NO_2)_2$ | 10 | 0.50 | 5 | 25 | Good | Inv. ex. |

[Table 6]

| No. | Test material | Salt contained in organic coating layer Type | Thickness of organic coating layer (μm) | Content of organic coating layer by ion conversion (g/m²) | Content of organic coating layer by ion conversion (mass%) | Rate of reduction of sheet thickness (%) | Evaluation of hydrogen embrittlement cracking | Remarks |
|---|---|---|---|---|---|---|---|---|
| 90 | C-0 | $NaNO_2$ | 1 | 0.05 | 5 | 18 | Fair | Inv. ex. |
| 91 | C-0 | $NaNO_2$ | 3 | 0.15 | 5 | 19 | Fair | Inv. ex. |
| 92 | C-0 | $NaNO_2$ | 5 | 0.25 | 5 | 21 | Good | Inv. ex. |

(continued)

| No. | Test material | Salt contained in organic coating layer | Thickness of organic coating layer (μm) | Content of organic coating layer by ion conversion | | Rate of reduction of sheet thickness (%) | Evaluation of hydrogen embrittlement cracking | Remarks |
|---|---|---|---|---|---|---|---|---|
| | | Type | | (g/m$^2$) | (mass%) | | | |
| 93 | C-0 | NaNO$_2$ | 10 | 0.50 | 5 | 22 | Good | Inv. ex. |
| 94 | C-0 | NaNO$_2$ | 15 | 0.75 | 5 | 26 | Good | Inv. ex. |
| 95 | C-0 | NaNO$_2$ | 20 | 1.00 | 5 | 25 | Good | Inv. ex. |
| 96 | C-0 | NaNO$_2$ | 30 | 1.50 | 5 | 26 | Good | Inv. ex. |
| 97 | C-0 | LiNO$_2$ | 10 | 0.50 | 5 | 20 | Good | Inv. ex. |
| 98 | C-0 | Mg(NO$_2$)$_2$ | 10 | 0.50 | 5 | 21 | Good | Inv. ex. |
| 99 | C-0 | KNO$_2$ | 10 | 0.50 | 5 | 19 | Fair | Inv. ex. |
| 100 | C-0 | Ca(NO$_2$)$_2$ | 10 | 0.50 | 5 | 22 | Good | Inv. ex. |
| 101 | C-0 | NH$_4$NO$_2$ | 10 | 0.50 | 5 | 20 | Good | Inv. ex. |
| 102 | C-0 | Sr(NO$_2$)$_2$ | 10 | 0.50 | 5 | 19 | Fair | Inv. ex. |
| 103 | C-1 | NaNO$_2$ | 1 | 0.05 | 5 | 22 | Good | Inv. ex. |
| 104 | C-1 | NaNO$_2$ | 3 | 0.15 | 5 | 24 | Good | Inv. ex. |
| 105 | C-1 | NaNO$_2$ | 5 | 0.25 | 5 | 21 | Good | Inv. ex. |
| 106 | C-1 | NaNO$_2$ | 10 | 0.50 | 5 | 25 | Good | Inv. ex. |
| 107 | C-1 | NaNO$_2$ | 15 | 0.75 | 5 | 26 | Good | Inv. ex. |
| 108 | C-1 | NaNO$_2$ | 20 | 1.00 | 5 | 29 | Good | Inv. ex. |
| 109 | C-1 | NaNO$_2$ | 30 | 1.50 | 5 | 28 | Good | Inv. ex. |
| 110 | C-1 | LiNO$_2$ | 10 | 0.50 | 5 | 22 | Good | Inv. ex. |
| 111 | C-1 | Mg(NO$_2$)$_2$ | 10 | 0.50 | 5 | 24 | Good | Inv. ex. |
| 112 | C-1 | KNO$_2$ | 10 | 0.50 | 5 | 21 | Good | Inv. ex. |
| 113 | C-1 | Ca(NO$_2$)$_2$ | 10 | 0.50 | 5 | 23 | Good | Inv. ex. |
| 114 | C-1 | NH$_4$NO$_2$ | 10 | 0.50 | 5 | 22 | Good | Inv. ex. |
| 115 | C-1 | Sr(NO$_2$)$_2$ | 10 | 0.50 | 5 | 24 | Good | Inv. ex. |

[Table 7]

| No. | Test material | Salt contained in organic coating layer | Thickness of organic coating layer (μm) | Content of organic coating layer by ion conversion | | Rate of reduction of sheet thickness (%) | Evaluation of hydrogen embrittlement cracking | Remarks |
|---|---|---|---|---|---|---|---|---|
| | | Type | | (g/m$^2$) | (mass%) | | | |
| 116 | D-0 | NaNO$_2$ | 1 | 0.05 | 5 | 15 | Fair | Inv. ex. |
| 117 | D-0 | NaNO$_2$ | 3 | 0.15 | 5 | 17 | Fair | Inv. ex. |
| 118 | D-0 | NaNO$_2$ | 5 | 0.25 | 5 | 16 | Fair | Inv. ex. |
| 119 | D-0 | NaNO$_2$ | 10 | 0.50 | 5 | 18 | Fair | Inv. ex. |
| 120 | D-0 | NaNO$_2$ | 15 | 0.75 | 5 | 20 | Good | Inv. ex. |
| 121 | D-0 | NaNO$_2$ | 20 | 1.00 | 5 | 22 | Good | Inv. ex. |

(continued)

| No. | Test material | Salt contained in organic coating layer | Thickness of organic coating layer ($\mu$m) | Content of organic coating layer by ion conversion | | Rate of reduction of sheet thickness (%) | Evaluation of hydrogen embrittlement cracking | Remarks |
|-----|------|-------|-----|------|------|-----|------|------|
| | | Type | | (g/m$^2$) | (mass%) | | | |
| 122 | D-0 | NaNO$_2$ | 30 | 1.50 | 5 | 23 | Good | Inv. ex. |
| 123 | D-0 | LiNO$_2$ | 10 | 0.50 | 5 | 17 | Fair | Inv. ex. |
| 124 | D-0 | Mg(NO$_2$)$_2$ | 10 | 0.50 | 5 | 17 | Fair | Inv. ex. |
| 125 | D-0 | KNO$_2$ | 10 | 0.50 | 5 | 17 | Fair | Inv. ex. |
| 126 | D-0 | Ca(NO$_2$)$_2$ | 10 | 0.50 | 5 | 17 | Fair | Inv. ex. |
| 127 | D-0 | NH$_4$NO$_2$ | 10 | 0.50 | 5 | 17 | Fair | Inv. ex. |
| 128 | D-0 | Sr(NO$_2$)$_2$ | 10 | 0.50 | 5 | 17 | Fair | Inv. ex. |
| 129 | D-1 | NaNO$_2$ | 1 | 0.05 | 5 | 18 | Fair | Inv. ex. |
| 130 | D-1 | NaNO$_2$ | 3 | 0.15 | 5 | 17 | Fair | Inv. ex. |
| 131 | D-1 | NaNO$_2$ | 5 | 0.25 | 5 | 19 | Fair | Inv. ex. |
| 132 | D-1 | NaNO$_2$ | 10 | *0.50* | 5 | 21 | Good | Inv. ex. |
| 133 | D-1 | NaNO$_2$ | 15 | 0.75 | 5 | 24 | Good | Inv. ex. |
| 134 | D-1 | NaNO$_2$ | 20 | 1.00 | 5 | 23 | Good | Inv. ex. |
| 135 | D-1 | NaNO$_2$ | 30 | 1.50 | 5 | 25 | Good | Inv. ex. |
| 136 | D-1 | LiNO$_2$ | 10 | 0.50 | 5 | 19 | Fair | Inv. ex. |
| 137 | D-1 | Mg(NO$_2$)$_2$ | 10 | 0.50 | 5 | 16 | Fair | Inv. ex. |
| 138 | D-1 | KNO$_2$ | 10 | 0.50 | 5 | 17 | Fair | Inv. ex. |
| 139 | D-1 | Ca(NO$_2$)$_2$ | 10 | 0.50 | 5 | 18 | Fair | Inv. ex. |
| 140 | D-1 | NH$_4$NO$_2$ | 10 | 0.50 | 5 | 18 | Fair | Inv. ex. |
| 141 | D-1 | Sr(NO$_2$)$_2$ | 10 | 0.50 | 5 | 16 | Fair | Inv. ex. |

[Table 8]

| No. | Test material | Salt contained in organic coating layer | Thickness of organic coating layer ($\mu$m) | Content of organic coating layer by ion conversion | | Rate of reduction of sheet thickness (%) | Evaluation of hydrogen embrittlement cracking | Remarks |
|-----|------|-------|-----|------|------|-----|------|------|
| | | Type | | (g/m$^2$) | (mass%) | | | |
| 142 | E-0 | NaNO$_2$ | 1 | 0.05 | 5 | 13 | Fair | Inv. ex. |
| 143 | E-0 | NaNO$_2$ | 3 | 0.15 | 5 | 11 | Fair | Inv. ex. |
| 144 | E-0 | NaNO$_2$ | 5 | 0.25 | 5 | 12 | Fair | Inv. ex. |
| 145 | E-0 | NaNO$_2$ | 10 | 0.50 | 5 | 14 | Fair | Inv. ex. |
| 146 | E-0 | NaNO$_2$ | 15 | 0.75 | 5 | 16 | Fair | Inv. ex. |
| 147 | E-0 | NaNO$_2$ | 20 | 1.00 | 5 | 18 | Fair | Inv. ex. |
| 148 | E-0 | NaNO$_2$ | 30 | 1.50 | 5 | 17 | Fair | Inv. ex. |
| 149 | E-0 | LiNO$_2$ | 10 | 0.50 | 5 | 13 | Fair | Inv. ex. |
| 150 | E-0 | Mg(NO$_2$)$_2$ | 10 | 0.50 | 5 | 14 | Fair | Inv. ex. |

(continued)

| No. | Test material | Salt contained in organic coating layer Type | Thickness of organic coating layer (μm) | Content of organic coating layer by ion conversion (g/m²) | Content of organic coating layer by ion conversion (mass%) | Rate of reduction of sheet thickness (%) | Evaluation of hydrogen embrittlement cracking | Remarks |
|---|---|---|---|---|---|---|---|---|
| 151 | E-0 | KNO$_2$ | 10 | 0.50 | 5 | 16 | Fair | Inv. ex. |
| 152 | E-0 | Ca(NO$_2$)$_2$ | 10 | 0.50 | 5 | 13 | Fair | Inv. ex. |
| 153 | E-0 | NH$_4$NO$_2$ | 10 | 0.50 | 5 | 15 | Fair | Inv. ex. |
| 154 | E-0 | Sr(NO$_2$)$_2$ | 10 | 0.50 | 5 | 14 | Fair | Inv. ex. |
| 155 | E-1 | NaNO$_2$ | 1 | 0.05 | 5 | 13 | Fair | Inv. ex. |
| 156 | E-1 | NaNO$_2$ | 3 | 0.15 | 5 | 16 | Fair | Inv. ex. |
| 157 | E-1 | NaNO$_2$ | 5 | 0.25 | 5 | 14 | Fair | Inv. ex. |
| 158 | E-1 | NaNO$_2$ | 10 | 0.50 | 5 | 15 | Fair | Inv. ex. |
| 159 | E-1 | NaNO$_2$ | 15 | 0.75 | 5 | 18 | Fair | Inv. ex. |
| 160 | E-1 | NaNO$_2$ | 20 | 1.00 | 5 | 20 | Good | Inv. ex. |
| 161 | E-1 | NaNO$_2$ | 30 | 1.50 | 5 | 21 | Good | Inv. ex. |
| 162 | E-1 | LiNO2 | 10 | 0.50 | 5 | 15 | Fair | Inv. ex. |
| 163 | E-1 | Mg(NO$_2$)$_2$ | 10 | 0.50 | 5 | 14 | Fair | Inv. ex. |
| 164 | E-1 | KNO$_2$ | 10 | 0.50 | 5 | 16 | Fair | Inv. ex. |
| 165 | E-1 | Ca(NO$_2$)$_2$ | 10 | 0.50 | 5 | 13 | Fair | Inv. ex. |
| 166 | E-1 | NH$_4$NO$_2$ | 10 | 0.50 | 5 | 17 | Fair | Inv. ex. |
| 167 | E-1 | Sr(NO$_2$)$_2$ | 10 | 0.50 | 5 | 15 | Fair | Inv. ex. |

As shown in Table 3 to Table 8, the organic coated steel sheets of the invention examples had organic coating layers containing specific amounts of nitrous acid salts, therefore could sufficiently suppress hydrogen embrittlement cracking due to hydrogen at the time of corrosion. As opposed to this, the steel sheets of the comparative examples did not have organic coating layers or their organic coating layers did not contain the specific amounts of nitrous acid salts, therefore could not suppress hydrogen embrittlement cracking due to hydrogen at the time of corrosion.

[INDUSTRIAL APPLICABILITY]

The organic coated steel sheet of the present invention is high strength steel sheet able to suppress hydrogen embrittlement cracking, so can be suitably utilized for various structural parts of transport machinery, first and foremost automobiles, and industrial machinery, household electrical appliances, etc., various structural members for construction, and various other fields.

REFERENCE SIGNS LIST

1 organic coated steel sheet
2 steel sheet
3 organic coating layer
4 plating layer
5 chemical conversion coating

**Claims**

1.  Organic coated steel sheet comprising

    steel sheet having a tensile strength of 980 MPa or more and
    an organic coating layer arranged on at least part of a surface of the steel sheet,
    the organic coating layer containing a nitrous acid salt in a content of 1 to 30 mass% and 0.05 g/m$^2$ or more as a nitrous acid radical.

2.  The organic coated steel sheet according to claim 1, wherein the nitrous acid salt is at least one type selected from a group comprising a lithium salt, sodium salt, potassium salt, magnesium salt, calcium salt, strontium salt, barium salt, and ammonium salt.

3.  The organic coated steel sheet according to claim 1 or 2, wherein a plating layer is arranged between the steel sheet and the organic coating layer.

4.  The organic coated steel sheet according to claim 1 or 2, wherein the tensile strength of the steel sheet is 1.2 to 3.0 GPa.

5.  The organic coated steel sheet according to claim 3, wherein the tensile strength of the steel sheet is 1.2 to 3.0 GPa.

6.  A shaped article formed using an organic coated steel sheet according to claim 1 or 2.

7.  A shaped article formed using an organic coated steel sheet according to claim 3.

8.  A shaped article formed using an organic coated steel sheet according to claim 4.

9.  A shaped article formed using an organic coated steel sheet according to claim 5.

# Fig. 1

# Fig. 2

## INTERNATIONAL SEARCH REPORT

| International application No. |
|---|
| **PCT/JP2024/016687** |

### A. CLASSIFICATION OF SUBJECT MATTER

*C23C 26/00*(2006.01)i; *B32B 15/01*(2006.01)i; *B32B 15/08*(2006.01)i; *C23C 28/00*(2006.01)i
FI:    C23C26/00 A; C23C28/00 A; B32B15/08 P; B32B15/01 B

According to International Patent Classification (IPC) or to both national classification and IPC

### B. FIELDS SEARCHED

Minimum documentation searched (classification system followed by classification symbols)

C23C26/00; B32B15/01; B32B15/08; C23C28/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2022-131411 A (NIPPON STEEL CORPORATION) 07 September 2022 (2022-09-07) paragraphs [0111]-[0142] | 1-9 |
| Y | JP 2021-011612 A (NIPPON STEEL CORPORATION) 04 February 2021 (2021-02-04) paragraphs [0069]-[0096] | 1-9 |
| A | JP 2022-180344 A (JFE STEEL CORPORATION) 06 December 2022 (2022-12-06) paragraphs [0061]-[0071] | 1-9 |
| A | JP 2010-126764 A (KABUSHIKI KAISHA KOBE SEIKO SHO) 10 June 2010 (2010-06-10) paragraphs [0021]-[0024], [0032], [0033] | 1-9 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **09 July 2024** | **23 July 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
### Information on patent family members

International application No.

**PCT/JP2024/016687**

| Patent document cited in search report | | | Publication date (day/month/year) | Patent family member(s) | | Publication date (day/month/year) |
|---|---|---|---|---|---|---|
| JP | 2022-131411 | A | 07 September 2022 | (Family: none) | | |
| JP | 2021-011612 | A | 04 February 2021 | (Family: none) | | |
| JP | 2022-180344 | A | 06 December 2022 | (Family: none) | | |
| JP | 2010-126764 | A | 10 June 2010 | KR 10-2010-0061374 | A | |
| | | | | CN 101748406 | A | |
| | | | | TW 201033406 | A | |
| | | | | MY 153676 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022180344 A